(19) Europäisches Patentamt
European Patent Office
Office européen des brevets

(11) Publication number: **0 056 149**
**B1**

(12) **EUROPEAN PATENT SPECIFICATION**

(45) Date of publication of patent specification: **11.06.86**

(51) Int. Cl.$^4$: **C 08 G 63/20**, C 08 G 63/24

(21) Application number: **81110781.2**

(22) Date of filing: **24.12.81**

(54) **Process for manufacturing aromatic polyesters.**

(30) Priority: **29.12.80 JP 187042/80**

(43) Date of publication of application:
**21.07.82 Bulletin 82/29**

(45) Publication of the grant of the patent:
**11.06.86 Bulletin 86/24**

(84) Designated Contracting States:
**BE DE FR GB IT NL**

(56) References cited:
**EP-A-0 026 868**
**FR-A-2 398 781**

**KORSHAK, V.V. and VINOGRADOVA S.V., "POLYESTERS", 1965, Pergamon Press, LONDON (GB)**

**PATENTS ABSTRACTS OF JAPAN, vol. 3, no. 50(C-44), april 27th 1979, page 85 C 44**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Asada, Masahiro**
**1-2-5, Yoshida-cho Hyogo-ku**
**Kobe-shi Hyogo-ken (JP)**
Inventor: **Azuma, Miyuki**
**6-520, 6-chome Maikodai Tarumi-ku**
**Kobe-shi Hyogo-ken (JP)**
Inventor: **Yonezawa, Kazuya**
**11-9, 4-chome, Kimikage-chi Kita-ku**
**Kobe-shi Hyogo-ken (JP)**

(74) Representative: **Vossius Vossius Tauchner Heunemann Rauh**
**Siebertstrasse 4 P.O. Box 86 07 67**
**D-8000 München 86 (DE)**

**EP 0 056 149 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for manufacturing aromatic polyesters, and more particularly, to an improvement in the interfacial polymerization process for manufacturing aromatic polyesters.

A number of processes, such as the interfacial, solution or melt polymerization, are known for the manufacture of aromatic polyesters. Japanese Patent Publication No. 1959/1965 discloses an interfacial polymerization process in which aromatic dicarboxylic acid chlorides dissolved in an organic solvent which is immiscible with water are mixed with bisphenols dissolved in an aqueous alkali solution. Japanese Patent Publication No. 5599/1962 discloses a solution polymerization process which comprises reacting aromatic dicarboxylic acid chlorides and bisphenols in an organic solvent. Japanese Patent Publication Nos. 15247/1963 and 28119/1968 disclose a melt polymerization process which comprises heating phenyl esters of aromatic dicarboxylic acids and bisphenols together. The aromatic polyesters prepared by these processes have outstanding heat resistance and mechanical and electrical properties, and are useful for a wide range of applications, including the manufacture of molded products, films and fibers.

According to the known interfacial polymerization process, a solution of an aromatic dicarboxylic acid chloride in an organic solvent immiscible with water, and a solution of a bisphenol in an aqueous alkali solution are mixed together under intensive agitation. A product having a high degree of polymerization can be obtained if a quaternary ammonium or phosphonium salt is used as a catalyst. If the agitation is discontinued, the reaction product usually separates into an aqueous solution phase containing inorganic salts, and a cloudy or opaque organic solvent phase containing the polymer and water in the form of an emulsion. There are some cases in which no phase separation occurs. It is, therefore, necessary to separate a lot of water from the polymer. In order to overcome these disadvantages, it has been proposed to adjust the pH value of the aqueous phase to at least 12 and heat it in order to destroy the emulsion (Japanese Patent Publication No. 2679/1978), treat the reaction product with an aqueous solution containing a lower aliphatic alcohol which is soluble in acetone or water (Japanese Patent Publication No. 12133/1980), use a centrifugal separator (Japanese Patent Publication No. 12133/1980), use a centrifugal separator (Japanese Laid-Open Patent Specification No. 55286/1973), or employ specific agitating conditions (Japanese Patent Publication No. 41249/1980).

Korshak et al. ("Polyesters", pages 471 to 473) teach a process for preparing polyesters by an interfacial polycondensation reaction in the presence of benzoyl chloride. The benzoyl chloride is used to control the molecular weight of the resultant polyester (see Fig. 192). It is added to the reaction system at the beginning of the polycondensation reaction and is consumed during the reaction.

EP—A—26868 also teaches an improved process for preparing aromatic polyesters wherein a phenyl derivative, e.g. benzoyl chloride, is added for the purpose of controlling the molecular weight of the resultant polyester. The phenyl derivative is introduced into the reaction system from the very beginning of the polycondensation reaction.

According to JP—A—54 25996, a monovalent phenol, monovalent amine or monovalent mercaptan is added to a reaction system during or after the polycondensation reaction in order to simplify the isolation of the solid aromatic polyester formed from the polyester containing organic solvent solution.

According to FR—A—2 398 781, benzoyl chloride is added to a solution polycondensation reaction mixture of a preparation of an aromatic linear polyester to react with the terminal groups of the polymer.

It is the object of the present invention to provide a process for manufacturing aromatic polyesters by interfacial polymerisation of an aromatic dicarboxylic acid dichloride with an alkali metal salt of a bisphenol in an aqueous solution in the presence of a phase transfer catalyst, in which a quick separation of the organic solvent phase containing the polymer from the aqueous phase takes place. This object is achieved by the invention.

The subject matter of the invention is a process for manufacturing aromatic polyesters by interfacial polymerisation of an aromatic dicarboxylic acid dihalide with an alkali metal salt of a bisphenol in an aqueous solution in the presence of a phase transfer catalyst, which is characterized in that 0.01 to 100 mol % based on the total monomer quantity of an acid monohalide are added into the reaction system at a time when the degree of conversion is at least 50%.

Although various acid monohalides can be employed in accordance with this invention, it is particularly desirable to use acid monohalides typically represented by formula (I):

$$R—Y—X \qquad (1)$$

in which R stands for a monovalent organic group such as an alkyl, alkenyl or aromatic such as aryl or aralkyl group, or the substituted product thereof, Y stands for a divalent group such as —CO—, —$SO_2$—, —SO—, —$PO_2$— or —PO—, and X stands for a halogen atom such as F, Cl or Br. It is usually suitable to use as R a group having 1 to 30 carbon atoms. Specific examples of these halides may include acetic acid chloride, butyric acid chloride, octylic acid chloride, benzoyl chloride, benzenesulfonyl chloride, benzenesulfinyl chloride, and benzenephosphonyl chloride, and the substituted products thereof.

The amount of the acid monohalide is preferably 1 to 100 mol %, or from an economical view not more than 30 mol %, based on the total monomer quantity, depending on the polymerization conditions.

The acid monohalide is added into the reaction system at a time after the polymerization conversion,

which means polymer per monomers in weight %, becomes at least 50, or more preferably after substantial termination of the polymerization reaction. In order to obtain a higher molecular weight, however, it is desirable to add the monohalide after the completion of the polymerization, i.e., after the intended degree of polymerization has been reached.

If the monohalide is added after the completion of the polymerization reaction, it is sufficient to effect agitation for a period of 5 to 30 minutes thereafter. Even if agitation is continued for a longer time, the two phases can be separated from each other quickly after the agitation has been discontinued. Any inorganic salt resulting from the polymerization is completely extracted into the aqueous phase at a temperature usually between 0 and 100°C.

According to the earlier invention of the inventors, the use of an oil-soluble phase transfer catalyst (hereinafter called PTC) made it possible to produce aromatic polyesters having a high molecular weight, while preventing the reaction system from emulsification. This invention provides a further improved process which enables an improved separation of the organic solvent phase containing the polymer from the aqueous phase. If a crown ether, which is one of the oil-soluble PTC, is employed, however, this invention does not produce any greatly improved result, since the crown ether itself is very effective for the phase separation.

In order to manufacture aromatic polyesters in accordance with this invention, it is possible to use any known aromatic dicarboxylic acid dihalide and an alkali metal salt of any known bisphenol. The preferred dihalides, especially dichlorides are shown by the formula:

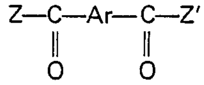

wherein Ar is a divalent aromatic group usually containing from 8 to 30 carbon atoms such as

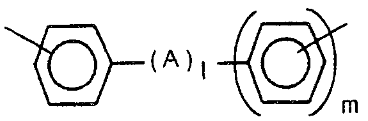

or

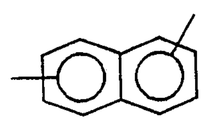

where l, m are ech 0 or 1 and preferably both m and n are not 0 at the same time, A is a divalent hydrocarbon group containing 1 to 10 carbon atoms such as an alkylene, cycloalkylene, alkylidene or cycloalkylidene group, the halogen substituted groups thereof or a nucleus substituted group thereof or a member selected from —O—, —S—, $—SO_2—$, —CO—, $—PO_2—$ and —PO—, Z and Z′ are each halogen atoms. Examples of the dichlorides include terephthalic and isophthalic acid chloride, or other compounds having a functional group in the same aromatic ring, 2,2(4,4′-dichlorocarbonyl-diphenyl)propane, (4,4′-dichlorocarbonyl-diphenyl)ether, polynuclear aroamtic dicarboxylic acid dichlorides, 1,4-naphthalene dicarboxyl acid dihalide, 2,6-naphthalene dicarboxyl acid dihalide, the nuclear-substituted compounds thereof and mixtures of the foregoing compounds.

The preferred bisphenols usually contain 6—30 carbon atoms and are shown by the formula:

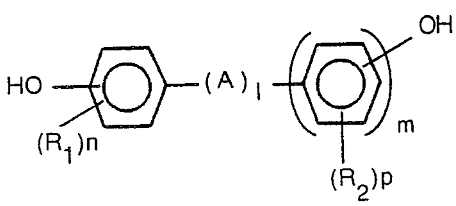

where, n, p are whole numbers of 0 to 4, $R_1$, $R_2$ are each a member selected from a hydrocarbon or a substituted hydrocarbon group containing 1 to 20 carbon atoms such as alkyl, alkenyl, alkynyl, aryl, aralkyl, alkoxy, aryloxy, aralkoxy, thioalkyl, alkylamino or arylamino groups, halogen atoms and nitro groups.

One can observe a further advantage which is shown as a remarkable decrease in colouring which otherwise occurs in the stage of drying the resulting polymer, when an alkali metal salt of bisphenol having at lest one substituted group located in the ortho position to the phenolic OH group, this case meeting $1 \leq n + p \leq 8$ in the above formula, is employed. Specific Examples of the bisphenols are bis(3-methyl-4-hydroxyphenyl)methane, 2,2-bis(3-methyl-4-hydroxyphenyl)propane, bis(3-methoxy-4-hydroxyphenyl)-methane, 2,2-bis(3-methoxy-4-hydroxyphenyl)propane, bis(3-chloro-4-hydroxyphenyl)methane, (3-isopropyl-4-hydroxyphenyl)ether, bis(4-hydroxy-2,6-dimethyl-3-methoxyphenyl)methane, 2,2-bis(2,6-dimethyl-3-methoxyphenyl)methane, 2,2-bis(3,5-dimethyl-4-hydroxyphenyl)propane, 2,2-bis(3,5-di-sec-butyl-4-hydroxyphenyl)propane, 2,2-bis(3,5-di-tert-butyl-4-hydroxyphenyl)propane, bis(3,5-dimethyl-4-hydroxyphenyl)methane, 1,1-bis(3,5-dimethyl-4-hydroxyphenyl)ethane, 1,1-bis(3,5-dimethyl-4-hydroxyphenyl)cyclohexane, 2,2-bis(3,5-dichloro-4-hydroxyphenyl)propane, 2,2-bis(3,5-dibromo-4-hydroxyphenyl)propane, 2,2-bis(3-bromo-4-hydroxy-5-methylphenyl)propane, bis(3,5-dimethyl-4-hydroxyphenyl)-sulfone, bis(3,5-dimethyl-4-hydroxyphenyl)ketone, bis(3,5-dimethyl-4-hydroxyphenyl)ether, bis(3,5-dimethyl-4-hydroxyphenyl)sulfide, 2,2-bis(3,5-dimethyl-4-hydroxyphenyl)hexafluoropropane, 2,2-bis(3,5-dimethoxy-4-hydroxyphenyl)propane, bis(3,5-dimethoxy-4-hydroxyphenyl)methane, 2,2-bis(3-methoxy-4-hydroxy-5-methylphenyl)propane, bis(3-methoxy-4-hydroxy-5-methylphenyl)methane, 2,2-bis(3,5-diphenyl-4-hydroxyphenyl)propane, bis(3,5-diphenyl-4-hydroxyphenyl)methane, 2,2-bis(3,5-diphenoxy-4-hydroxyphenyl)propane, bis(3-phenoxy-4-hydroxy-5-methyl)methane, 3,3', 5,5'-tetramethyl-4,4'-dihydroxy-biphenyl, 3,3', 5,5'-tetraphenyl-4,4'-dihydroxy-biphenyl, 1,4-dihydroxy-2-methoxy-benzene, 1,3-dihydroxy-6-methoxy-benzene.

The bisphenols are used either alone or, in a mixture, or in combination of (A) the above compounds having a nucleus substituted group with (B) those having no such substitution or with a polyaromatic diol such as 1,4-dihydroxy-naphtalene. When using the above combination the molar ratio of (A)/(B) is 100/0 to 1/99, preferably 100/0 to 10/90. The bisphenols are introduced into the reaction system in the form of an alkali solution.

The phase transfer catalysts used in the present invention are e.g. quaternary ammonium salts, quarternary phosphonium salts or crown ethers. Specific examples of the quaternary ammonium salts are tetraethyl ammonium chloride, tetrabutyl ammonium chloride, trioctylmethylammonium chloride, benzyltributylammonium chloride, benzyltriethylammonium chloride, benzyltrimethylammonium chloride, cetyldimethylbenzylammonium chloride, octyltriethylammonium bromide, decyltriethylammonium bromide, lauryltriethylammonium bromide, cetyltriethylammonium bromide, N-lauryl-pyridinium chloride, N-laurylpyridinium bromide and N-heptylpyridinium bromide. Specific examples of the quaternary phosphonium salt are tetrabutylphosphonium bromide, triethyloctadecylphosphonium bromide, tetraphenylphosphonium bromide, triphenylmethylphosphonium bromide, trioctylethylphosphonium bromide and cetyltriethylphosphonium bromide. As crown ether all of those can be used which are capable of forming a complex with an alkali metal ion so as to activate a phenolate ion to be paired, e.g. 18-crown-6, dibenzo-18-crown-6, dicyclohexyl-18-crown-6, dibenzo-24-crown-8, 12-crown-4, 15-crown-5, cyclohexyl-12-crown-4, tribenzo-18-crown-6, tetrabenzo-18-crown-6 and dibenzo-26-crown-6. The catalyst is used in an amount of from 0.01 to 20% by mole, preferably 0.1 to 10% by mole, based on the total acid dichloride.

It is possible to use any organic solvent if it is substantially insoluble in water. Usually chlorinated hydrocarbons are employed, usch as methylene chloride, chloroform, ethylene dichloride, 1,1,2-trichloroethane, 1,1,2,1-tetrachloroethane, or orthodichlorobenzene, but it is also possible to use an organic solvent which is inactive (inert) under the reaction conditions, for example, nitrobenzene, toluene or xylene.

Further, monofunctional compounds such as phenols, thiols or amines may be added in order to obtain a polymer having the exact desired molecular weight. The polymerization reaction is effected usually at a temperature between 0 to 100°C for about 2 to 5 hours.

The aromatic polyester thus produced can be recovered by conventional methods after the organic phase containing the polymer has been separated from the aqueous phase. For example, it is possible to precipitate the polymer by adding an organic solvent which does not dissolve the polymer, or to pour the reaction product into hot water to evaporate the solvent and solidify the polymer. It is also possible to obtain a polymer film directly by casting the solution. The polymer can, thus, be collected in the form of powder, particles, a film or fibers.

The invention will now be described in further detail with reference to several examples which do not limit the scope of this invention.

## Example 1

5.7 g (0.025 mol) of 2,2-bis(4-hydroxyphenyl)propane and 3.2 g (0.0125 mol) of bis(3,5-dimethyl-4-hydroxyphenyl)methane were dissolved in 150 ml of water containing 5.63 g of sodium hydroxide. 7.62 g (0.0375 mol) of terephthalic acid chloride were dissolved in 150 ml of methylene chloride, and 0.38 g of trioctylmethylammonium chloride was added. The two solutions thus prepared were mixed, and reacted with each other for two hours at room temperature under intensive agitation. When the agitation was discontinued, a polymer solution in the form of oil droplets was found in the reaction system. To this polymer solution were added 1.22 g (0.0087 mol) of benzoyl chloride, and agitation was continued again for five minutes. The agitation was discontinued, and the content of the reactor was separated completely into an aqueous phase and an organic phase within five minutes. The inherent viscosity [η] of the resulting polymer was 0.6. The viscosities were measured in $CHCl_3$ at 32°C in all examples.

## Example 2

2.28 g (0.01 mol) of 2,2-bis(4-hydroxyphenyl)propane were dissolved in 20 ml of water containing 1 g of sodium hydroxide. 1.02 g (0.005 mol) of terephthalic acid chloride and 1.02 g (0.005 mol) of isophthalic acid chloride were dissolved in 40 ml of methylene chloride, and 0.12 g of benzyltriethylammonium chloride was added. The two solutions thus prepared were mixed at a temperature of 0 to 10°C under intensive agitation. When the agitation was discontinued after three hours, the methylene chloride phase was cloudy, and not completely separated from the aqueous phase. To the mixture were added 0.61 g (0.0043 mol) of benzoyl chloride, and agitation was continued again for five minutes, whereby the reaction mixture immediately separated into a transparent organic phase and an aqueous phase. A polymer having an inherent viscocity [η] of 0,5 was obtained after reprecipitation with methanol from the organic phase employing a separatory funnel.

Example 3

A 300 ml flask, equipped with a stirrer and a condenser was charged under a nitrogen atmosphere with 1.52 g (6.67 m mol) 2,2-bis(4-hydroxyphenyl)propane and 3.41 g (13.33 m mol) of bis(3.5-dimethyl-4-hydroxyphenyl)methane, and then with a solution cooled to 1°C containing 0.38 g (0.40 m mol) of lauryl-pyridinium chloride (30% by wt aqueous solution), 4.00 g (50 m mol) of sodium hydroxide and 40 ml of water. Into the flask 4.10 g (20.2 m mol) of terephthalic acid dichloride dissolved in 40 ml of methylenechloride and held at 1°C was gradually added under stirring. During the progress of the reaction the system became more and more emulsified. 90 minutes later the organic phase containing the polymer and the aqueous phase did not separate even after standing for a long time.

Thereafter, 0.5 ml of benzoyl chloride was added to the system and the system was stirred for 20 minutes. This time the two phases separated completely after standing for a few minutes. After separating the aqueous phase by decantation, the organic phase was neutralized using diluted-hydrochloric acid and then washed with water. A precipitation of a white and fibrous polymer was observed when the resulting organic phase was poured into methanol. The polymer was then filtered off, washed with acetone and finally dried at 120°C under reduced pressure. A white, non-coloured polymer having an [η] of 0.950 was obtained in 100% yield.

Example 4

A solution was prepared by dissolving 1.14 g (5 m mol) of 2,2-bis(4-hydroxyphenyl)propane and 1.28 g (5 m mol) of bis(3,5-dimethyl-4-hydroxyphenyl)methane in an aqueous solution containing 1.5 g of sodium hydroxide and 40 ml of water. Another solution was prepared by dissolving 2.10 g of terephthalic acid dichloride in a mixed solvent containing 30 ml of methylene dichloride and 10 ml of toluene and then adding thereto 0.1 g (2.5 mol% of terephthalic acid dichloride) of trioctylmethyl ammonium as a catalyst. The two solutions were mixed and the reaction between the monomers was effected under vigorous agitation. An emulsification occurred between the organic phase containing the polymer and the aqueous phase during the progress of the reaction. After 90 minutes the two phases could not be separated even after standing for a long time.

A small portion of the emulsion was taken out and dried. The polymer thus obtained was colored purple. On the other hand 0.5 ml of benzoyl chloride was added to the rest of the emulsion. The emulsion was stirred for 20 minutes and then two phases separated after allowing to stand for a few minutes. The procedure to obtain the polymer from the emulsion follows Example 3. The polymer obtained was not at all coloured even when dried at 100°C. The polymer has an [η] of 0.4.

## Claims

1. A process for manufacturing aromatic polyesters by interfacial polymerisation of an aromatic dicarboxylic acid dihalide with an alkali metal salt of a bisphenol in an aqueous solution in the presence of a phase transfer catalyst, characterized in that 0.01 to 100 mol % based on the total monomer quantity of an acid monohalide are added into the reaction system at a time when the degree of conversion is at least 50%.

2. A process according to claim 1, wheein said acid monohalide is added at a time after substantially terminating the polymerisation reaction.

3. A process according to claim 1, wheein said acid monohalide is at least one of the compounds of the formula:

$$R—Y—X$$

where R stands for a monovalent organic group, Y stands for a group selected from the group consisting of —CO—, —$SO_2$—, —SO—, —$PO_2$— and —PO—, and X stands for an halogen.

4. A process according to claim 3, wherein R is a hydrocarbon group consisting from one to 30 carbon atoms.

5. A process according to claim 4, wherein said hydrocarbon group is a member selected from a group consisting of alkyl group, alkenyl group, aryl group and aralkyl group.

6. A process according to claim 1, wherein the amount of said acid monohalide is one to 30 mol % based on the total monomer quantity.

7. A process according to claim 1, wherein said aromatic dicarboxylic acid dihalide is a dicarboxylic acid dichloride containing from 8 to 30 carbon atoms.

8. A process according to claim 1, wherein said bisphenol contains from 6 to 30 carbon atoms.

9. A process for separating an aromatic polyester organic solvent phase from a reaction mixture obtained by interfacial polymerisation of an aromatic dicarboxylic acid dihalide with an alkali metal salt of a bisphenol in an aqueous solution in the presence of a phase transfer catalyst, characterized in that 0.01 to 100 mol % based on the total monomer quantity of an acid monohalide are added to the reaction system at a time when the degree of conversion is at least 50% to separate the organic solvent phase containing the resultant polyester from the aqueous phase.

**Patentansprüche**

1. Verfahren zur Herstellung von aromatischen Polyestern durch Grenzflächenpolymerisation eines aromatischen Dicarbonsäuredihalogenids mit einem Alkalimetallsalz eines Bisphenols in einer wäßrigen Lösung in Gegenwart eines Phasenübertragungskatalysators, dadurch gekennzeichnet, daß man 0,01 bis 100 Mol-%, bezogen auf die gesamte Monomerenmenge, eines Säuremonohalogenids dem Reaktionssystem zu einem Zeitpunkt zusetzt wenn der Umwandlungsgrad mindestens 50% beträgt.

2. Verfahren nach Anspruch 1, wobei das Säuremonohalogenid zu einem Zeitpunkt gegeben wird, nachdem die Polymerisationsreaktion in wesentlichen beendet ist.

3. Verfahren nach Anspruch 1, wobei das Säuremonohalogenid mindestens eine Verbindung der Formel

R—Y—X

ist, in der R einen einwertigen organischen Rest bedeutet, Y eine der Gruppen —CO—, —$SO_2$—, —SO—, —$PO_2$— oder —PO— darstellt und X ein Halogenatom bedeutet.

4. Verfahren nach Anspruch 3, wobei der Rest R ein Kohlenwasserstoffrest mit 1 bis 30 Kohlenstoffatomen ist.

5. Verfahren nach Anspruch 4, wobei der Kohlenwasserstoffrest ein Alkyl-, Alkenyl-, Aryl- oder Aralkylrest ist.

6. Verfahren nach Anspruch 1, wobei die Menge des Säuremonohalogenids 1 bis 30 Mol-%, bezogen auf die gesamte Monomerenmenge, ist.

7. Verfahren nach Anspruch 1, wobei das aromatische Dicarbonsäuredihalogenid ein Dicarbonsäuredichlorid mit 8 bis 30 Kohlenstoffatomen ist.

8. Verfahren nach Anspruch 1, wobei das Bisphenol 6 bis 30 Kohlenstoffatome enthält.

9. Verfahren zur Abtrennung einer einen aromatischen Polyester und ein organisches Lösungsmittel umfassenden Phase aus einem Reaktionsgemisch, das durch Grenzflächenpolymerisation eines aromatischen Dicarbonsäuredihalogenids mit einem Alkalimetallsalz eines Bisphenols in einer wäßrigen Lösung in Gegenwart eines Phasenübertragungskatalysators erhalten wurde, dadurch gekennzeichnet, daß man dem Reaktionssystem 0,01 bis 100 Mol-%, bezogen auf die gesamte Monomerenmenge, eines Säuremonohalogenids zu einem Zeitpunkt zusetzt, wenn der Umwandlungsgrad mindestens 50% beträgt, um die organische Lösungsmittelphase, die den entstandenen Polyester enthält, von der wäßrigen Phase zu trennen.

**Revendications**

1. Procédé de fabrication de polyesters aromatiques par la polymérisation interfaciale d'un dihalogénure d'acide dicarboxylique aromatique avec un sel de métal alcalin d'un bisphénol dans une solution aqueuse en présence d'un catalyseur de transfert de phase, caractérisé en ce que l'on ajoute de 0,01 à 100 moles %, par rapport à la quantité de monomères totale, d'un monohalogénure d'acide au système de réaction au moment où le degré de conversion est d'au moins 50%.

2. Procédé suivant la revendication 1, caractérisé en ce que l'on ajoute le monohalogénure d'acide au moment où la réaction de polymérisation est pratiquement terminée.

3. Procédé suivant la revendication 1, caractérisé en ce que le monohalogénure d'acide est au moins un des composés de la formule:

R—Y—X

dans laquelle R représente un groupe organique monovalent, Y représente un groupe choisi dans le groupe comprenant —CO—, —$SO_2$—, —SO—, —$PO_2$—, et —PO—, et X représente un halogène.

4. Procédé suivant la revendication 3, caractérisé en ce que R représente un groupe hydrocarburé contenant de 1 à 30 atomes de carbone.

5. Procédé suivant la revendication 4, caractérisé en ce que le groupe hydrocarburé est un membre choisi dans le groupe comprenant les groupes alkyle, les groupes alcényle, les groupes aryle et les groupes aralkyle.

6. Procédé suivant la revendication 1, caractérisé en ce que la quantité de monohalogénure d'acide est de 1 à 30 moles % par rapport à la quantité de monomères totale.

7. Procédé suivant la revendication 1, caractérisé en ce que le dihalogénure d'acide dicarboxylique aromatique est un dichlorure d'acide dicarboxylique contenant de 8 à 30 atomes de carbone.

8. Procédé suivant la revendication 1, caractérisé en ce que le bisphénol contient de 6 à 30 atomes de carbone.

9. Procédé de séparation d'une phase de solvant organique contenant un polyester aromatique d'un mélange de réaction obtenu par la polymérisation interfaciale d'un dihalogénure d'acide dicarboxylique aromatique avec un sel de métal alcalin d'un bisphénol dans une solution aqueuse en présence d'un catalyseur de transfert de phase, caractérisé en ce que l'on ajoute de 0,01 à 100 moles %, par rapport à la quantité de monomères totale, d'un monohalogénure d'acide au système de réaction au moment où le degré de conversion est d'au moins 50% de manière à séparer la phase de solvant organique contenant le polyester résultant de la phase aqueuse.